# EUROPEAN PATENT SPECIFICATION

(11) **EP 3 615 576 B1**
(45) Date of publication and mention of the grant of the patent: **22.05.2024**
(21) Application number: 18791014.6
(22) Date of filing: 27.04.2018
(51) Int. Cl.: D01F 2/00, C08B 1/00, C08B 1/08, C08B 16/00, D21C 5/00, C08B 15/00, C08B 15/06, D01D 1/00, D21C 1/06, D21C 3/02

(54) **TREATMENT PROCESS FOR TEXTILE-BASED MATERIALS**
BEHANDLUNGSVERFAHREN FÜR MATERIALIEN AUF TEXTILBASIS
PROCÉDÉ DE TRAITEMENT POUR DES MATIÈRES À BASE DE TEXTILE

(30) Priority: 27.04.2017 FI 20175376
(43) Date of publication of application: 04.03.2020
(73) Proprietor: Infinited Fiber Company Oy, 02150 Espoo (FI)
(72) Inventor: HARLIN, Ali, 02044 VTT (FI); MÄÄTTÄNEN, Marjo, 02044 VTT (FI); SIVONEN, Eino, 33101 Tampere (FI); VEHVILÄINEN, Marianna, 02044 VTT (FI); ASIKAINEN, Sari, 02044 VTT (FI); VALTA, Kyösti, 33101 Tampere (FI); SÄRKILAHTI, Airi, 02044 VTT (FI)
(74) Representative: Laine IP Oy
(86) International application number: PCT/FI2018/050310
(87) International publication number: WO 2018/197756

(56) References cited:
- CN-A- 102 898 531
- CN-A- 103 613 784
- CN-A- 104 060 473
- CN-A- 104 651 010
- US-A- 2 682 443
- US-A- 5 609 676
- US-A1- 2016 369 456
- YIN ET AL: "Chemical modification of cotton cellulose in supercritical carbon dioxide: Synthesis and characterization of cellulose carbamate", CARBOHYDRATE POLYMERS, APPLIED SCIENCE PUBLISHERS, LTD. BARKING, GB, vol. 67, no. 2, 18 November 2006 (2006-11-18), pages 147-154, XP005772958, ISSN: 0144-8617, DOI: 10.1016/J.CARBPOL.2006.05.010
- KATAJAINEN, L.: "Puuvillapohjaisen selluloosakarbamaatin elinkaaritase", MASTER'S THESIS, 15 December 2016 (2016-12-15), XP055529225, Retrieved from the Internet: URL:http://urn.fi/URN:NBN:fi:jyu-201701051 068 [retrieved on 2018-06-04]
- SCHIMPER, C.: "Effect of alkali pre-treatment on Trichoderma cellulase treatments of cellulose fibers", MASTER,S THESIS, June 2009 (2009-06), pages 1-40, XP055529226, Retrieved from the Internet: URL:http://epub.boku.ac.at/obvbokhs/conten t/titleinfo/1083224 [retrieved on 2018-06-04]
- NEGULESCU, I. I. ET AL.: "Recycling Cotton from Cotton/Polyester Fabrics", TEXTILE CHEMIST AND COLORIST, vol. 30, no. 6 June 1998 (1998-06), pages 31-35, XP055305945, Retrieved from the Internet: URL:http://infohouse.p2ric.org/ref/31/3059 7.pdf
- WANG, Z. ET AL.: "Reuse of waste cotton cloth for the extraction of cellulose nanocrystals", CARBOHYDRATE POLYMERS, vol. 157, 18 October 2016 (2016-10-18), pages 945-952, XP029848657,
- KHAJAVI, R. ET AL.: "Recycling of cotton/polyester fabric with chemical and biochemical methods for producing paper fibers", PROCEEDINGS - INTERNATIONAL FIBER CONFERENCE 2006: EXTREME AND AESTHETIC TEXTILES, IFC, 2006, pages 353-354, XP009517464, ISBN: 89-953858-0-4

## Description

### Background of the Invention

### Field of the Invention

The present invention concerns a process for treating cellulose-based materials, typically textile-based waste-materials, to prepare them for further use. The treatment includes a chemical treatment to cause at least a partial dissolution.

Particularly, the process is used for the treatment of cotton-based waste materials.

### Description of Related Art

Currently almost all postconsumer textile waste is sent to incineration or landfills despite that even 95 % of textiles are recyclable. Only some of preconsumer waste is mechanically recycled. However, since the beginning of 2016 landfilling of the used textiles has been prohibited in the EU. Thereby textiles and their raw materials that cannot be reutilized as such should be burnt in energy production.

Naturally, recycling would be preferred. Processing textile materials to obtain reusable fibres is known, e.g. from WO2013/124265A1, which describes the regeneration of a cellulose containing material by dispersing and precipitation.

Another known technique utilized in recycling is the hydrolysis of the fibres. Typically, it is preceded by a mechanical removal of metals and hard polymer pieces, such as buttons and zippers. For example, WO2010/124944A1 discloses a process for the hydrolysis of cellulose.

The Lyocell, e.g. Ioncell-F is a similar regeneration process including a dissolution of the starting material using an ionic liquid as solvent (WO2014/162062A1). The BioCelSol process, in turn, utilizes an enzymatic treatment of the starting material. Both of these processes, however, focus on preparing textiles from wood.

The regenerated fibres can subsequently be used for various purposes, including spinning or carbamation.

It is known from US 7,662,953 how carbamate cellulose is manufactured from high quality cellulose solutions. A multi-phase dissolution technique for carbamate cellulose is introduced in US 8,066,903, where it is taught how a low temperature is applied in the dissolution and how the solution is prepared by first wetting the mass in low diluted alkali and then in highly concentrated and strongly chilled alkali. Further relevant information can be found in KATAJAINEN, L.: "Puuvillapohjaisen selluloosakarbamaatin elinkaaritase",MASTER'S THESIS, 15 December 2016.

In carbamation it is common practice to use dissolving grade pulp. Typically, the cellulosic content of the pulp is > 90% and the lignin content < 1%. One possible starting material for dissolving grade pulp is cotton (or linter).

The use of pure cotton or cotton blend is not very reasonable, since there are many other uses for these pure materials. Further, the cotton also causes some difficulties. Earlier, carbamation for cotton linter has been carried out in super critical carbon dioxide environment due to the difficulty in opening up the tight fibre structure of the cotton (Yin C et al.).

However, these further uses of cotton and cotton blends will become more reasonable if the existing processes are changed to allow the use of waste cotton materials.

### Summary of the Invention

The invention is defined by the features of the independent claims. Some specific embodiments are defined in the dependent claims.

The present invention provides a process for treating a cotton-based textile waste material to cause regeneration of the cotton material.

The present invention also provides a process for chemically treating a cotton-based textile waste material to cause dissolution of the cotton material.

The focus is now on regenerating especially the cotton-based textile waste, not suited for recycling otherwise, by using chemical methods. Regeneration of cotton-based textile waste includes two main steps, which are cellulose dissolution and preparation of textile fibres.

Cellulose dissolution requires different pre-treatments of the textile waste to improve and/ or refine the quality and properties of the regenerated cellulose and textile fibres. The aim is to improve reactivity of cotton by means of increasing the surface area, adjust the degree of polymerization and activation of fibres and remove impurities to improve the solubility/ dissolving of cellulose. Pre-treatment of the waste material is crucial for the quality of the regenerated material and thereby it is under constant research.

Uses of product of dissolution are versatile. In the case of cotton-based textile waste the aim is usually to produce carbamate cellulose, which can then be converted into cellulosic fibres. Other main application areas are different coating applications, regenerated cellulosic films, cellulosic sponges, foams, coagulated cellulosic beads and particles.

Thus, the invention provides a low-cost method for utilizing textile waste materials in processes, where wood pulp has typically been used. The process utilizes a non-wood raw-material for producing cellulosic fibres. The process also results in a smaller CO₂ footprint compared to conventional processes.

### Embodiments of the Invention

### Definitions

In the present context, the term "fibrous" describes materials containing a sufficient amount of fibres giving it a fibrous character. Cellulosic materials are a typical example of such fibrous materials.

The term "cotton-based" material, or the term "cotton blend" includes all materials containing more than 40% cotton. However, it is preferred to use materials containing at least 70% cotton. Although some sources are labelled as "pure" cotton or "100% cotton", they typically contain up to 10% other materials. Thus, also in the present context, it is assumed that all "cotton textiles" include up to 10% other materials.

The present invention concerns a process for treating textile-based materials, typically waste-materials, to prepare them for further use. The treatment includes two or more steps of chemical treatment to cause at least a partial dissolution of the textile material.

At least one of the chemical treatment steps is carried out using alkali. Said step is typically carried out as an alkaline extraction, and results in an increased surface area, decolorization of the raw material and removal of impurities, such as silica. When carried out at an elevated temperature (hot alkaline extraction), polyester fibres (PES) can also be removed. The use of wetting agents boosts the effect.

The removal of impurities can also be carried out using a mechanical treatment step. However, the alkaline extraction has a higher versatility and is more beneficial for the overall process.

The alkali treatment is also intended to cause swelling and some disintegration or separation of fractions. Said separation of fractions can include, e.g. dye removal or separation of textile sizing agent(s). Thus, a product of this alkali treatment is a fibre slurry.

The alkali treatment can optionally be combined with one or more other chemical treatments, e.g. by using enzymes, acids and/or bleaching chemicals.

Said acid treatment adjusts the degree of polymerization (DP) of the raw material, and decreases its metal ion content.

Metal ions are not wanted, among others since they impair the colour, disturb DP adjustment in carbamation stage, impair the filterability and spinnability, block filters, decrease fibre strength, cause clogging of spinners, decrease the uniformity of the fibre titre, act as retardants during aging, and cause light-induced yellowing as well as detrimental reactions in the presence of hydrogen peroxide.

The bleaching can include oxidative and alkaline stages. Particularly enzymes are used for bleaching (e.g. amylases, xylanases), or for adjusting the degree of polymerization (DP) of the textile material, or its fibre reactivity in the dissolution stage (e.g. endoglucanases). The oxidative stages of the bleaching are typically carried out using hydrogen peroxide, peracetic acid or ozone. These agents function by adjusting the degree of polymerization of the treated material and by bleaching it.

Refining is used as a chemical treatment, and results in an increased available surface area.

According to a particularly preferred embodiment, the combination of chemical treatment steps are selected from the following alternatives, in any order considered suitable:
A. Hot alkaline extraction, with wetting agent
B. Alkaline extraction and Refining
C. Alkaline extraction, Ozone treatment, and Peroxide treatment
D. Alkaline extraction, Ozone treatment, Refining, and Peroxide treatment
E. Alkaline extraction and Peroxide treatment
F. Alkaline extraction, Enzyme treatment, and Peroxide treatment

Typically, the refining is carried out before or after an alkaline extraction, or before or after an ozone treatment, optionally combined with one or more further treatments.

According to one preferred option, however, the alkaline extraction of alternatives B.-F. is carried out as the first chemical treatment.

In alternatives B.-F., the alkaline extraction can be carried out either as a hot alkaline extraction or at room temperature.

All of said alternatives can be supplemented with an acid treatment or acid washing to cause, among others, a further decrease in the metal content of the treated material. For example, the content of calcium (Ca), ferrous (Fe(II)) ions, copper (Cu) and manganese (Mn) can be reduced by an acid treatment.

Typically, the above described chemical treatment steps are also followed by at least one drying step. Complete removal of moisture is, however, not required.

According to an embodiment of the invention, the textile waste material is subjected to one or more mechanical pre-treatment steps before the chemical treatments, among others for removing clothing essentials, such as buttons and zips or other metal or plastic accessories. Preferably, the obtained mass is subsequently coarsely grinded.

An optional combined mechanical and enzymatic treatment will cause an improved adjustment of the degree of polymerization, and provide a pre-version of BioCelSol fibres.

The "BioCelSol" material is produced by an enzymatic treatment, followed by dissolution in an alkaline solution. To obtain the BioCelSol fibres, said treatment steps are naturally followed by a precipitation.

According to another embodiment of the invention, the material treated in accordance with one or more of the above described embodiments, is used in a carbamate process to produce cellulose carbamate.

Typically, the carbamation is carried out by using urea and hydrogen peroxide, the latter causing a decrease of the degree of polymerization (DP) of the material, and allowing a reaction to take place, while subjecting the reaction mixture to mechanical processing, e.g. by compressing, rubbing and/or stretching.

Preferably, the obtained solid carbamate is subsequently carried through a dissolution step, typically using an alkali solution, optionally containing zinc (e.g. sodium zincate). This dissolution can be carried out either in a cold zinc solution, or by adding the carbamate into the zinc solution at room temperature, and then freezing (to -40°C) and thawing the mixture. The obtained solution can then be filtered and used, e.g. for spinning.

According to a further embodiment, the material treated in accordance with the above described, is used in fiber spinning, or in other applications for replacing viscose, such as in sausage casings.

The following non-limiting examples are intended merely to illustrate the advantages obtained with the embodiments of the present invention.

### EXAMPLES

### Example 1 - Chemical treatment of cotton-based material

A commercial cotton blend was subjected to various chemical treatments as shown in Table 1, and the viscosity, reactivity and brightness of the resulting treated material was measured (also the results being shown in Table 1). As a comparison, it can be said that the Fock reactivity of commercial viscose grade dissolving pulp is >60%, and its viscosity is 450-500ml/g.

**Table 1. Properties of chemically treated cotton blends.**

| **Treatment** | **Chemical charge, kg/t** | **Viscosity, ml/g** | **Reactivity (Fock ), %** | **Brightness, %** |
|---|---|---|---|---|
| Initial cotton | | 880 | 12.6 | n.d. |
| Z-P | 35kg O₃ + 15kg H₂O₂ /t | 320 | 34.6 | 75.6 |
| Z-P-refining | 35kg O₃ + 15kg H₂O₂ /t | 320 | 68.1 | 76.2 |
| E-Z-P | 200kg NaOH + 6kg O₃ + 10kg H₂O₂ /t | 310 | 30.4 | 82.2 |
| E-Z-refining-P | 200kg NaOH + 6kg O₃ + 4kg H₂O₂ /t | 350 | 51.8 | 82.0 |

| | | | | |
|---|---|---|---|---|
| • n.d. = not determined • Z = ozone (O₃) • P = hydrogen peroxide (H₂O₂) • E = alkaline extraction | | | | |

The metal contents of various non-treated and chemically treated cotton blends were also measured (see Table 2).

**Table 2. Management of metal content in waste textiles.**

| **Treatment** | **Al, mg/kg** | **Ca, mg/kg** | **Co, mg/kg** | **Cu, mg/kg** | **Fe, mg/kg** | **Mg, mg/kg** | **Mn, mg/kg** | **Si, mg/kg as SiO₂** |
|---|---|---|---|---|---|---|---|---|
| non-treated cotton | 230 | 890 | <0.5 | 12 | 42 | 54 | 0.95 | 400 |
| A | 41 | 50 | <0.5 | 9.9 | 20 | 12 | <0.3 | 220 |
| E-P-A | 32 | 53 | <0.5 | 6.0 | 21 | 13 | <0.3 | 120 |
| HCE-A | 39 | 51 | <0.5 | 5.1 | 15 | 11 | <0.3 | 66 |
| HCE-wetting agent-A | 22 | 15 | <0.5 | 5.1 | 16 | 13 | <0.3 | 80 |
| Dissolving grade pulp | | 40-100 | 0.1 | 2 | 2-8 | 220 | 0.2-1.5 | 50 |

| | | | | | | | | |
|---|---|---|---|---|---|---|---|---|
| • A = Acid • E = Alkaline extraction • P = hydrogen peroxide (H₂O₂) • HCE = alkaline extraction performed at elevated temperature | | | | | | | | |

The properties of materials treated using a hot alkaline extraction (with wetting agent) followed by an acid treatment are shown in Table 3.

**Table 3. Staple fibre properties.**

| **Pre-treatment** | **Post-consumer cotton, treated with alkaline extraction (with wetting agent) and acid treatment** | | | | **Acid treated post-consumer cotton (bed sheets)** | |
|---|---|---|---|---|---|---|
| **Parameter** | | | | | | |
| Spinning speed, m/min | 10.5 | 20 | 27 | 29 | 16.5 | 29 |
| Capacity of gear pump, ml/min | 5.8 | 11.2 | 15.1 | 17.0 | 0.3 | 0.3 |
| Number / diameter (µm) of spinneret orifices | 2000/50 | 2000/50 | 2000/50 | 2000/50 | 100/51 | 100/51 |
| Stretching between godets, % | 54 | 53 | 53 | 46 | 60 | 47 |
| Spinneret draw ratio | 0.76 | 0.77 | 0.72 | 0.49 | 0.45 | 0.45 |
| Titre of fibres, dtex | 1.52±0.06 | 1.50±0.02 | 1.60±0.05 | 2.45±0.04 | 2.16±0.41 | 2.15±0.47 |
| Elongation of fibres, % | 18.0±3.2 | 16.8±2.7 | 17.6±2.6 | 21.8±3.0 | 16±1.37 | 19.5±3.0 |
| Tenacity of fibres, cN/tex | 16.4±1.5 | 15.8±1.6 | 13.8±0.9 | 13.3±0.9 | 17.4±0.9 | 16.4±1.1 |

As these results show, the alkaline treatment provides the most effective dissolution, particularly when carried out as a hot alkaline extraction (with wetting agent) followed by an acid treatment. This alkaline treatment is preferably combined with either an ozone treatment or hydrogen peroxide treatment or both.

### Industrial Applicability

The present material can be used as raw material for a cellulose regeneration as well as in different coating applications, regenerated cellulosic films, cellulosic sponges, coagulated cellulosic beads and particles, and generally for replacement of conventional pre-treated cellulose.

In particular, the present material is useful in recycling of both pre-consumer and post-consumer textiles by enabling the regeneration of quality cellulosic fibers from waste textiles.

### Citation List

### Patent Literature

US 7,662,953
US 8,066,903
WO2010/124944A1
WO2013/124265A1
WO2014/162062A1

### Non-patent Literature

Yin C, Li J, Xu Q, Peng Q, Liu Y, Shen X (2007) Chemical modification of cotton cellulose in supercritical carbon dioxide: synthesis and characterization of cellulose carbamate; Carbohydr. Polym. 67(2):147-15
KATAJAINEN, L.: "Puuvillapohjaisen selluloosakarbamaatin elinkaaritase", MASTER'S THESIS, 15 December 2016.

## Claims

1. A process for refining cotton-based textile waste materials, where the textile material is subjected to two or more treatment steps selected from chemical and optionally enzymatic treatment steps, **characterized by** one treatment step being an alkaline extraction, and by carrying out a carbamation step on the chemically treated textile material, with the material at a solids content of 70 w-%.

2. The process of claim 1, **characterized by** utilizing an acid in a chemical treatment step, preferably by treating the alkaline-treated material with an acid.

3. The process of claim 1 or 2, **characterized by** selecting the chemical treatment steps from alkaline extraction at room temperature, hot alkaline extraction, acid treatment, ozone treatment, peroxide treatment and enzymatic treatment.

4. The process of any preceding claim, **characterized by** carrying out an alkaline extraction, followed by an ozone treatment, a peroxide treatment or both.

5. The process according to any preceding claim, **characterized by** providing the textile material in a solids content of > 40w-%, preferably between 41 and 70w-%, before said treatment steps.

6. Use of the material treated using the process of any of claims 1 to 5 in fiber spinning, or in replacing viscose.

## Patentansprüche

1. Prozess zur Veredelung von Textilabfallmaterialien auf Baumwollbasis, bei dem das Textilmaterial zwei oder mehr Behandlungsschritten unterzogen wird, die aus chemischen und gegebenenfalls enzymatischen Behandlungsschritten ausgewählt werden, **dadurch gekennzeichnet, dass** ein Behandlungsschritt eine alkalische Extraktion ist, und dass ein Carbamierungsschritt an dem chemisch behandelten Textilmaterial durchgeführt wird, wobei das Material einen Feststoffgehalt von 70 Gew.-% aufweist.

2. Prozess nach Anspruch 1, **gekennzeichnet durch** das Verwenden einer Säure in einem chemischen Behandlungsschritt, bevorzugt durch das Behandeln des alkalisch behandelten Materials mit einer Säure.

3. Prozess nach Anspruch 1 oder 2, **gekennzeichnet durch** das Auswählen der chemischen Behandlungsschritte aus alkalischer Extraktion bei Raumtemperatur, heißer alkalischer Extraktion, Säurebehandlung, Ozonbehandlung, Peroxidbehandlung und enzymatischer Behandlung.

4. Prozess nach einem vorstehenden Anspruch, **gekennzeichnet durch** das Durchführen einer alkalischen Extraktion, gefolgt von einer Ozonbehandlung, einer Peroxidbehandlung oder beidem.

5. Prozess nach einem vorstehenden Anspruch, **gekennzeichnet durch** das Bereitstellen des Textilmaterials vor den Behandlungsschritten mit einem Feststoffgehalt von > 40 Gew.-%, bevorzugt zwischen 41 und 70 Gew.-%.

6. Verwendung des nach dem Prozess nach einem der Ansprüche 1 bis 5 behandelten Materials in der Faserspinnerei oder als Ersatz für Viskose.

## Revendications

1. Procédé de raffinage de matériaux de déchets textiles à base de coton, dans lequel le matériau textile est soumis à deux étapes de traitement ou plus sélectionnées parmi des étapes de traitement chimique et facultativement enzymatique, **caractérisé en ce qu'**une étape de traitement est une extraction alcaline, et par la réalisation d'une étape de carbamation sur le matériau textile traité chimiquement, le matériau présentant une teneur en matières solides de 70 % en poids.

2. Procédé selon la revendication 1, **caractérisé par** l'utilisation d'un acide dans une étape de traitement chimique, de préférence le traitement du matériau traité en milieu alcalin avec un acide.

3. Procédé selon la revendication 1 ou 2, **caractérisé par** la sélection des étapes de traitement chimique parmi une extraction alcaline à température ambiante, une extraction alcaline à chaud, un traitement à l'acide, un traitement à l'ozone, un traitement au peroxyde et un traitement enzymatique.

4. Procédé selon une quelconque revendication précédente, **caractérisé par** la réalisation d'une extraction alcaline, suivie d'un traitement à l'ozone, d'un traitement au peroxyde, ou des deux.

5. Procédé selon une quelconque revendication précédente, **caractérisé par** la fourniture du matériau textile à une teneur en matières solides de > 40 % en poids, de préférence entre 41 et 70 % en poids, avant lesdites étapes de traitement.

6. Utilisation du matériau traité par le procédé selon l'une quelconque des revendications 1 à 5 dans le filage de fibres, ou en remplacement de la viscose.
